Europäisches Patentamt

European Patent Office

Office européen des brevets

(11) Publication number: **0 191 532**
A1

# (12) EUROPEAN PATENT APPLICATION

(21) Application number: **86200179.9**

(22) Date of filing: **10.02.86**

(51) Int. Cl.⁴: **G 21 K 1/02, H 05 G 1/64,**
**G 01 T 1/164**

(30) Priority: **12.02.85 NL 8500376**

(43) Date of publication of application: **20.08.86**
**Bulletin 86/34**

(84) Designated Contracting States: **DE FR GB NL**

(71) Applicant: **N.V. Philips' Gloeilampenfabrieken,**
**Groenewoudseweg 1, NL-5621 BA Eindhoven (NL)**

(72) Inventor: **Van der Laaken, Maarten, INT.**
**OCTROOIBUREAU B.V. Prof. Holstlaan 6, NL-5656 AA**
**Eindhoven (NL)**
Inventor: **Den Boer, Jacob Anne, INT. OCTROOIBUREAU**
**B.V. Prof. Holstlaan 6, NL-5656 AA Eindhoven (NL)**

(74) Representative: **Koppen, Jan et al, INTERNATIONAAL**
**OCTROOIBUREAU B.V. Prof. Holstlaan 6, NL-5656 AA**
**Eindhoven (NL)**

(54) **X-ray examining device.**

(57) An X-ray examining device in accordance with the invention includes an X-ray source, an object carrier, an X-ray detector and a curved stray radiation grid which is arranged between the object carrier and an entrance window of the X-ray detector. In order to obtain images at different irradiation angles, rotation of X-ray source and X-ray detector about, for example a patient to be examined is necessary. In inclined positions of the X-ray detector, however, imaging is not optimum because the distance between the X-ray source and the entrance screen of the X-ray detector must be increased because of the customary flat shape of the stray radiation grid. Moreover, the stray radiation grid will also absorb a comparatively large amount of X-rays when the X-ray detector is not ideally positioned. These drawbacks are eliminated when use is made of a stray radiation grid in which either the direction of curvature is identical or opposed to that of the curvature of the entrance window of the X-ray detector, or the direction of curvature is identical to that of the curvature of the object carrier.

ACTORUM AG

X-ray examining device.


The invention relates to an X-ray examining device which includes an X-ray source, an object carrier, an X-ray detection system having a curved entrance window, and a stray radiation geid which is mounted between the object carrier and an entrance side of the detection system.

An X-ray examining device of this kind is known from U.S. 4,220,890.

The X-ray examining device described therein comprises an X-ray detector in the form of an X-ray image intensifier tubde. A stray radiation grid is arranged in front of an entrance window of the X-ray image intensifier tube. After having irradiated an object to be examined, a beam of image-carrying X-rays from the X-ray source passes through the stray radiation geid and subsequently through the entrance window. Inside the X-ray image intensifier tube an entrance screen is provided on the entrance window, said screen consisting of, for example a layer of $S_cI$ on which a photocathode is provided. In this screen an image-carrying X-ray beam is converted into a beam of photo-electrons. Electrons emerging from the photocathode are accelerated to, for example 25 kV after which they are imaged on a luminescent exit screen. _Via_ an exit window, an image-carrying light beam emerges from the X-ray intensifier tube by means of which, for example a photographic plate can be exposed or a television image can be formed.

In order to obtain images in different irradiation directions, rotation of the X-ray source and the detection system about an object to be examined will be required. When use is made of a flat stray radiation grid, the image formation will not be optimum in inclined positions of the X-ray image intensifier tube, because the distance between the X-ray image intensifier tube and the object necessarily increases because of the geometry of the stray radiation grid. Because of this comparatively long distance in the case of irradiation in inclined positions, the X-ray source is often moved to an ideal angular position during a measurement, but the X-ray detection system is not. Consequently, the image formation will not be optimum and the stray radiation grid will exhibit a locally inhomogeneous radiation absorption. Consequently, for adequate illumination across the entire entrance surface of the detection system the intensity of the X-ray beam will have to be increased; this is undesirable because such an increase will result in a higher radiation dose.

It is the object of the invention to eliminate these drawbacks; to this end, an X-ray examining device of the kind set forth is characterized in that the stray radiation grid comprises radiation-sbsorbing laminations, either the direction of a curvature of the stray radiation grid being identical or opposed to that of a curvature of the curved entrance window, or the direction of a curvature of the stray radiation grid being identical to that of a curvature of the object carrier.

From U.S. Patent Specification 2,760,077 a stray radiation grid is known which has the same curvature as a convex (viewed from the X-ray source) entrance window, but this grid does not comprise radiation-absorbing laminations. The stray radiation grid in said U.S. Patent Specification includes a coil for absorbing secondary radiation, which coil, however, is difficult to construct.

When the stray radiation grid is curved in the same direction in the case of a convex entrance window (viewed from the X-ray source), the distance between the object to be examined and the entrance screen can be reduced during rotation of the X-ray image-forming system about the object to be examined, so that image-forming can be enhanced.

The X-ray detection system of an embodiment of an X-ray examining device in accordance with the invention is formed by an X-ray film camera having a cylindrically curved entrance screen, the object carrier being adapted to said curvature in order to minimize the focal distance.

In the case of a concave detection system entrance (viewed from the X-ray source), a focusing stray radiation grid can be comparatively easily realized by adaptation to the divergence of the incident X-ray beam.

This notably holds good for cylindrically curved stray radiation grids. In that case it will merely be necessary to mount the laminations, being flat per se, in accordance with the divergence of the incident X-ray beam. Notably in the case of a non-focusing stray radiation grid, the grid can be connected at option to the object carrier or to the detection system.

Some embodiments in accordance with the invention will be described in detail hereinafter with reference to the drawing. Therein:

figure 1 shows an X-ray examining device in which the stray radiation grid is curved in the same direction as the concave entrance window (viewed from the X-ray source), and

figure 2 shows an X-ray examining device in which the stray radiation grid is curved so as to be concave (viewed from the X-ray source), and connected to an X-ray film camera.

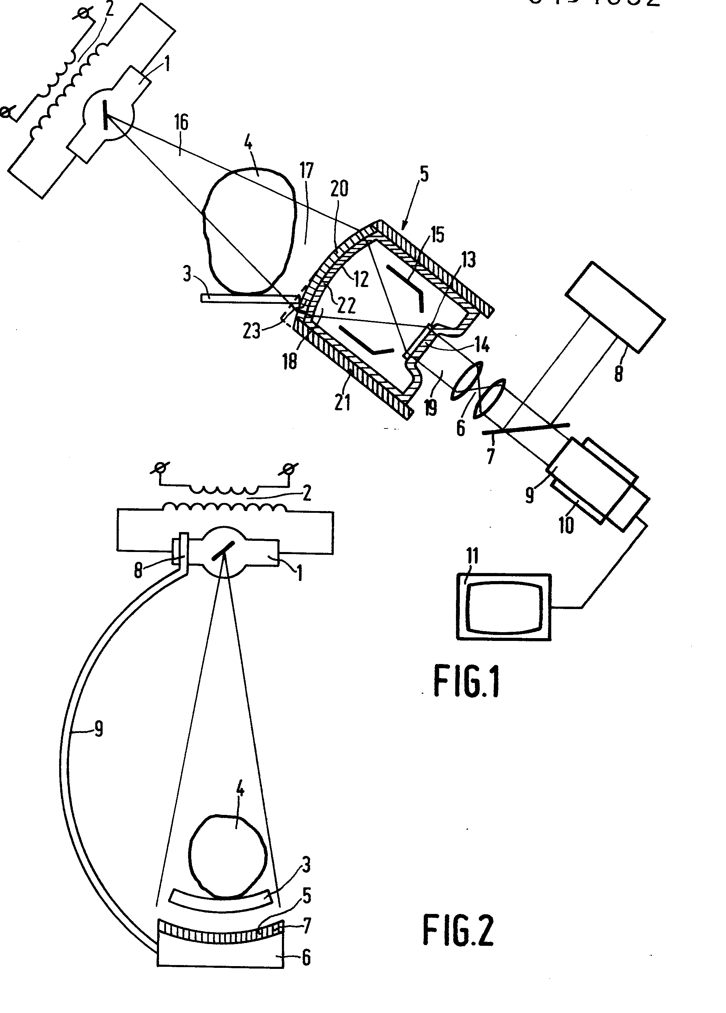

An X-ray examining device as shown in figure 1 includes an X-ray source 1 with a high-voltage source 2, an object carrier 3 for a patient 4 to be examined, an X-ray image intensifier tube 5, a basic objective 6, a semi-transparent mirror 7, a film camera 8, a television camera tube 9 with a beam deflection coil 10, and a television monitor 11. The X-ray image intensifier tube 5 includes an entrance screen 12 with (not separwtely shown) an X-ray luminescent screen which is preferably made of $C_sI$ and which is provided on the inner side, and a photocathode, an electron optical system which includes one or more intermediate electrodes 15 in addition to the entrance screen 12 and an exit screen 13 which is in this case provided on the inner side of an exit window 14. The entrance
screen 12 is mounted on the inner side of an entrance window 22. Furthermore, a ferromagnetic shielding jacket 21
may be provided around the X-ray image intensifier tube.
An incident X-ray beam 16 irradiates the patient 4 and a
transmitted image-carrying X-ray beam 17 is incident on
the entrance screen of the X-ray image intensifier tube.
The X-ray beam 17 incident on the entrance screen is converted into a beam of photo-electrons 18 which is accelerated to, for example, 25 kV and imaged on the exit screen
13. Via the exit screen 14 an image-carrying light beam
19 emerges which can be used, as desired, to expose a
photographic plate or to form a television image. In accordance with the invention, between the patient and the
X-ray image intensifier tube there is arranged a convex
stray radiation grid 20 (viewed from the X-ray source).
This grid intercepts X-rays whose propagation direction
deviates excessively, for example due to dispersion in the
patient, from the propagation direction of the beam 17.
During rotation of the X-ray image intensifier tube about
the patient which is necessary in order to obtain images
at different irradiation angles, the distance between the
patient to be examined and the entrance screen can be
minimized because of the convex shape of the stray radiation grid. Consequently, the image formation is improved.
The stray radiation grid includes laminations 23 which
are focused in accordance with the divergence of the
image-carrying X-rays in order to homogenize the X-ray absorption.

An X-ray examining device as shown in figure 2
includes an X-ray source 1 with a high-voltage source 2,
an object carrier 3 for a patient 4 to be examined, a
stray radiation grid 5 and an X-ray film camera 6. The
object carrier 3 and the stray radiation grid 5 are both
concave, viewed from the X-ray source. The absorption of
the X-rays can be homogenized and hence minimized by
adapting the direction of the laminations 7 of the stray radiation grid to the divergence of the image-carrying X-ray beam.

In the case of focusing stray radiation grids the curvature of the detection entrance window or screen is preferably chosen so that the centre of curvature coincides with the object focal point of the X-ray source. In that case the laminations can be simply mounted perpendicularly to the entrance window. The X-ray source and, for example the stray radiation grid connected to the X-ray film camera in figure 2, should then remain in a fixed mutual position. To this end, in the embodiment shown in figure 2 the X-ray source (via a holder 8) as well as the X-ray film camera is connected to a so-called C-arc 9 for combined rotation about the object. Notably for comparatively small rotations it may be advantageous to use a fixed position of the source and the detection system and to position the object to be examined so as to be rotatable.

0191532
20-01-1986

1.        An X-ray examining device which includes an X-ray source, an object carrier, an X-ray detection system having a curved entrance window, and a stray radiation grid which is mounted between the object carrier and an entrance side of the detection system, characterized in that the stray radiation grid comprises radiation-absorbing laminations, either the direction of a curvature of the stray radiation grid being identical or opposed to that of a curvature of the curved entrance window, or the direction of a curvature of the stray radiation grid being identical to that of a curvature of the object carrier.

2.        An X-ray examining device as claimed in Claim 1, characterized in that the X-ray detection system includes an X-ray image intensifier tube which includes a convex entrance window (viewed from the X-ray source).

3.        An X-ray examining device as claimed in Claim 1, characterized in that the X-ray detection system includes a concave entrance window (viewed from the X-ray source).

4.        An X-ray examining device as claimed in Claim 1 or 3, characterized in that the X-ray detection system includes an X-ray film camera with a curved entrance screen.

5.        An X-ray examining device as claimed in any one of the preceding Claims, characterized in that the stray radiation grid is spherically curved at least when viewed in a cross-sectional view.

6.        An X-ray examining device as claimed in any one of the preceding Claims, characterized in that the radiation.absorbing laminations are focussed with the divergence of the incident X-ray beam.

7.        An X-ray examining device as claimed in any one of the preceding Claims, characterized in that the object carrier is curved so as to be concave (viewed from the X-ray source) and is adapted to the curvature of the stray radiation grid.

8.　　　　　An X-ray examining device as claimed. in Claims 4 and 6, characterized in that the stray radiation grid is connected to either the object carrier or the detection system.

9.　　　　　An X-ray examining device as　laimed in any one of the preceding Claims, characterized in that a radius of curvature of the stray radiation grid is substantially equal to the distance between the X-ray source and the stray radiation grid.

0191532

**FIG.1**

**FIG.2**

PHN 11273

0191532

## European Patent Office

# EUROPEAN SEARCH REPORT

Application number

EP 86 20 0179

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| X | US-A-2 760 077 (R. LONGINI)<br><br>* Column 2; figures 1-3 *<br><br>--- | 1,2,6,8 | G 21 K 1/02<br>H 05 G 1/64<br>G 01 T 1/164 |
| X | US-A-3 858 050 (R. CARLSON)<br><br>* Column 2; figure 1 *<br><br>--- | 1,2,5,6 | |
| A,D | FR-A-2 386 129 (N.V. PHILIPS)<br>* Page 3; figure 1 * & US - A - 4 220 890<br><br>--- | 1 | |
| A | DE-A-2 507 150 (SIEMENS AG)<br>* Pages 1,6; figure 1 *<br><br>--- | 1,2,6 | |
| A | DE-A- 370 123 (S. RUDORFF & CO.)<br>* Page 1; figure 1 *<br><br>----- | 1,7 | TECHNICAL FIELDS SEARCHED (Int. Cl.4)<br><br>G 21 K 1/02<br>H 05 G 1/64<br>G 01 N 23/04<br>A 61 B 6/06<br>G 01 T 1/164 |

The present search report has been drawn up for all claims

| Place of search | Date of completion of the search | Examiner |
|---|---|---|
| THE HAGUE | 20-05-1986 | BOEHM CH.E.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82